(19) Europäisches Patentamt
European Patent Office
Office européen des brevets

(11) **EP 1 662 400 B1**

(12) **EUROPEAN PATENT SPECIFICATION**

(45) Date of publication and mention
of the grant of the patent:
**06.10.2010 Bulletin 2010/40**

(51) Int Cl.:
*G06F 12/08* (2006.01)     *G06F 3/06* (2006.01)
*G06F 11/10* (2006.01)

(21) Application number: **04257279.2**

(22) Date of filing: **24.11.2004**

(54) **Apparatus with dual writing function, and storage control apparatus**

Vorrichtung mit doppelter Schreibfunktion und Speichersteuerungsvorrichtung

Système d'écriture en miroitage et système de contrôle de stockage

(84) Designated Contracting States:
**DE FR GB**

(43) Date of publication of application:
**31.05.2006 Bulletin 2006/22**

(60) Divisional application:
**06121819.4 / 1 770 529**

(73) Proprietor: **FUJITSU LIMITED**
**Kawasaki-shi,**
**Kanagawa 211-8588 (JP)**

(72) Inventors:
• **Kimura, Osamu,c/o Fujitsu Limited**
**Kawasaki-shi, Kanagawa 211-8588 (JP)**
• **Ogawa, Yuichi,c/o Fujitsu Comp. Tech. Limited**
**Kawasaki-shi, Kanagawa 211-8588 (JP)**
• **Haneda, Terumasa,c/o Fujitsu Comp. Tech. Limited**
**Kawasaki-shi, Kanagawa 211-8588 (JP)**

• **Kobayashi, Akihito,c/o Fujitsu Limited**
**Kawasaki-shi, Kanagawa 211-8588 (JP)**
• **Uchida, Koji,c/o Fujitsu Limited**
**Kawasaki-shi, Kanagawa 211-8588 (JP)**
• **Takatsu, Kazuma,c/o Fujitsu Limited**
**Kawasaki-shi, Kanagawa 211-8588 (JP)**
• **Nagashima, Katsuhiko,c/o Fujitsu Limited**
**Kawasaki-shi, Kanagawa 211-8588 (JP)**

(74) Representative: **Hitching, Peter Matthew et al**
**Haseltine Lake LLP**
**Lincoln House, 5th Floor**
**300 High Holborn**
**London**
**WC1V 7JH (GB)**

(56) References cited:
**US-A- 5 937 174     US-A1- 2003 158 999**
**US-A1- 2004 117 579**

**Description**

BACKGROUND OF THE INVENTION

1) Field of the Invention

The present invention relates to an apparatus having a dual writing function (multi-writing function) to write data, transferred from an external apparatus such as a host, in two or more cache memories, and more particularly to a storage control unit provided between a physical device (for example, a magnetic disk unit) and a host for controlling the access to the physical device by the host. The present invention is suitable for use in RAID(Redundant Arrays of Inexpensive Disk).

2) Description of the Related Art

US 2003/0158999 A1 discloses a method and apparatus for cache coherency in a storage system. US 5937174 discloses a cache memory control architecture within a RAID storage subsystem which simplifies the migration and porting of existing control methods and structures to newer high performance cache memory designs.
In general, a storage apparatus serving as an external storage unit is connected through a network or the like to a host (computer). This storage apparatus is for, in accordance with the access (input/output request, I/O request) from the host, writing data from the host in a physical device (for example, a disk unit) or reading out data requested by the host from the physical device to transfer it to the host, and it is made up of a disk unit and a storage control unit located between the disk unit and the host for controlling the access from the host to the disk unit.
Usually, this storage control unit includes at least a host interface module for controlling the interface to the host, a disk interface module for controlling the interface to the disk unit, andtwoormoremanagementmodules for generally managing the entire storage control unit.
In addition, a cache memory is mounted on the management modules to temporarily store data to be written (which sometimes will be referred to equally as to written data) from the host into the disk unit or data to be read out from the disk unit into the host, and each of the management modules is also made to manage this cache memory.
As an interface bus for a connection between the host interface module and the management modules or an interface bus for a connection between the disk interface module and the management modules, there is used a standardized bus, for example, PCI (Peripheral Component Interconnect) bus.
In the storage control unit thus configured, in reading out data from the disk unit into the host, the data to be read is first transferred from a disk unit preserving the data to the disk interface module and then shifted from the disk interface module through the PCI bus to the cache memory of the management module to be temporarily stored therein. Following this, the data to be read, existing on the cache memory of the management module, is transferred through the PCI bus to the host interface module and then read out from the host interface module into the host.
Conversely, in writing data from the host into the disk unit, the data to be written is transferred from the host to the host interface module and then shifted from the host interface module through the PCI bus to the cache memory of the management module to be temporarily stored therein. At this time, the data to be written, which has a high frequency of the access from the host, is retained in the cache memory, and if the frequency becomes low, the data is transferred from the cache memory through the PCI bus to the disk interface module to be written in a predetermined disk unit by the disk interface module.
Moreover, in general, in writing data from the host into the storage apparatus, for the purpose of preventing user's data before the writing in a disk unit such as a magnetic disk unit from disappearing due to troubles of a hardware (management module) including the cache memory, or the like, in the interior of the storage apparatus, the user's data transferred from the host is doubly written in two cache memories (the same data is written in a plurality of hardwares) (for example, see Japanese patent Laid-Open Nos. HEI 07-160432, 05-189314 and 07-20994).
In the storage control unit arranged as mentioned above, in a case in which data is dual-written in cache memories of two management modules (for example, CM-A and CM-B), the host interface module, when receiving data to be written from the host, usually transfers this data through the PCI bus to a designated address of the CM-A (cache memory A) to write it thereat and further transfers the same data through the PCI bus to a designated address of the CM-B (cache memory B) to write it thereat. That is, the same data is transferred twice between the host interface module and the two management modules.
However, for the dual-writing of data, the conventional storage control unit requires that the same data is transferred twice from one host interface module to two management modules through the use of a standardized bus having a low transfer rate (speed), and this is not preferable in processing performance. Therefore, a desired solution to this problem involves carrying out the dual-writing of data in cache memories at a higher rate by one address designation for the enhancement of the processing performance.

In addition, in a case in which a mechanism for the dual-writing is simply incorporated into a hardware, there is a need to make the management so that data is written at the identical address on cache memories of two management modules (CM-A, CM-B). However, this dual-writing causes a severe limitation on the data allocation (data layout) in the cache memories to lower the degree of freedom of the data allocation and, hence, useless areas develop in the cache memories. For this reason, there is also a desire to increase the degree of freedom of the data allocation (cache management) in the cache memories for efficient use of the cache memories.

SUMMARY OF THE INVENTION

The present invention has been developed with a view to eliminating these problems, and it is therefore an object of the invention to carry out the dual-writing of data in cache memories at a higher rate by a single address designation for the enhancement of the processing performance and further to increase the degree of freedom of the cache management for realizing the efficient use of the cache memories.

For this purpose, in accordance with an aspect of the present invention, there is provided a storage control apparatus adapted to be placed between a disk unit and a host for controlling access to said disk unit by said host, said storage control apparatus comprising: a plurality of management modules, each including a cache memory, for generally controlling the entire apparatus; characterised by: a disk interface module for controlling an interface to said disk unit; a host interface module for controlling an interface to said host; and a bridge module connected through respective interface busses to said disk interface module, said host interface module and said management modules for making connections among said disk interface module, said host interface module and said management modules for data transfer among said modules, and further characterised in that: said host interface module includes: address designation means for producing addressing information to designate two written-in destinations, being destinations at which data received from said host is to be written through said bridge module into the respective cache memories of two of said plurality of management modules; and said bridge module includes: address production means for analyzing said addressing information, which is received from said host interface module together with said data to be written, to produce two transferred-to addresses, being addresses designating the two management modules that include the cache memories in which said data is to be actually written, and also to produce written-in addresses, being addresses in those cache memories; and data transfer control means for controlling data transfer from said bridge module to said management modules so that said data is transferred simultaneously via different respective said interface buses to the two management modules designated by said two transferred-to addresses, whereafter the transferred data is written at said written-in address in said cache memory of each of the two management modules.

In this arrangement, it is also appropriate that the address designation means designates, in the addressing information, a page address in the cache memory of each of the management modules and an offset address in a page designated by the page address, as the written-in address for the data to be written in the cache memory. Moreover, it is also appropriate that each of the management modules includes management means for managing information on the management module which is in mirror relation to this management module and for managing the association between a master area address in the cache memory in this management module and a mirror area address in the cache memory of the management module being in the mirror relation to this management module, and the address designation means of the host interface module produces the addressing information on the basis of information acquired from the management means of one of the two management modules.

With the aforesaid apparatus with a dual-writing function and storage control apparatus according to the present invention, the address designation means of the first module (host interface module) produces the addressing information for the designation of two written-in destinations, and in the bridge module, the address production means produces, on the basis of the addressing information, two transferred-to addresses (two second modules (management modules)) and the written-in addresses in the respective cache memories. Moreover, the data transfer control means of the bridge module transfers the data to be written to the two second modules (management modules) corresponding to the two transferred-to addresses, with it being written at the written-in address of the cache memory of each of the second modules (management modules).

Therefore, when the first module (host interface module) once carries out the address designation to make the data transfer from the first module (host interface module) to the bridge module, the data to be written is transferred through the bridge module, which provides a higher transfer rate than that of a standardized bus, to the cache memories of the two second modules (management modules) to be doubly written therein, which enables the dual-writing in the cache memories to be done at a high rate for considerable improvement of the processing performance.

Moreover, since the address designation means of the first module (host interface module) designates, in the addressing information, a page address in the cache memory of each of the management modules and an offset address in each page as the written-in address for the data to be written in each of the cache memories, the data to be written can be transferred to separate addresses in the cache memories of the two second modules (management modules) to be written therein, thereby increasing the degree of freedom of the cache management and achieving the efficient use of the cache memories.

Still moreover, since each of the second modules (management modules) is equipped with the management means and this management means manages the information on a second module (management module) which is in mirror relation to this second module and manages the association between a master area address in the cache memory of this second module (management module) and a mirror area address in the cache memory of the management module being in mirror relation to this second module (management module) , so the address designation means of the first module (host interface module) can produce the addressing information on the basis of the information acquired from the management means in one of the two second modules (management modules) without making communications between the two second modules (management modules) which are in mirror relation to each other.

Yet moreover, since the management means manages the mirror area of the second module (management module) in mirror relation, one second module (management module) can efficiently utilize the mirror area of the other management module without making communications between the two second modules (management modules) which are in mirror relation to each other. For example, in a case in which the capacity of the master area in the cache memory of one second module (management module) runs short, on the basis of the situation of the management by the aforesaid management means, the utilization of the mirror area in the cache memory of the other second module (management module) is feasible, which enables the efficient utilization of both the master area and mirror area in the cache memory.

BRIEF DESCRIPTION OF THE DRAWINGS

FIG. 1 is a block diagram showing a minimum basic configuration of a storage apparatus (storage control unit) according to an embodiment of the present invention;
FIG. 2 is an illustration of a format for addressing information to be produced in the storage control unit (host interface module) shown in FIG. 1;
FIG. 3 is an illustration of an arrangement of a cache memory according to this embodiment;
FIG. 4 is an illustration of the association between a master area (local area) and a mirror area in the cache memory according to this embodiment;
FIG. 5 is an illustration useful for explaining one example of a management operation for the cache memory according to this embodiment;
FIG. 6 is a block diagram showing an example of a concrete configuration of a storage apparatus (storage control unit) according to an embodiment of the present invention;
FIG. 7 is a block diagram showing a concrete example of an essential part of a bridge module of the storage control unit shown in FIG. 6; and
FIG. 8 is an illustration of, in the storage control unit shown in FIGs. 6 and 7, a format for addressing information to be produced in a host interface module and a format for address information to be produced from the same addressing information in a PCI bridge module.

DESCRIPTION OF THE PREFERRED EMBODIMENTS

Embodiments of the present invention will be described hereinbelow with reference to the drawings.

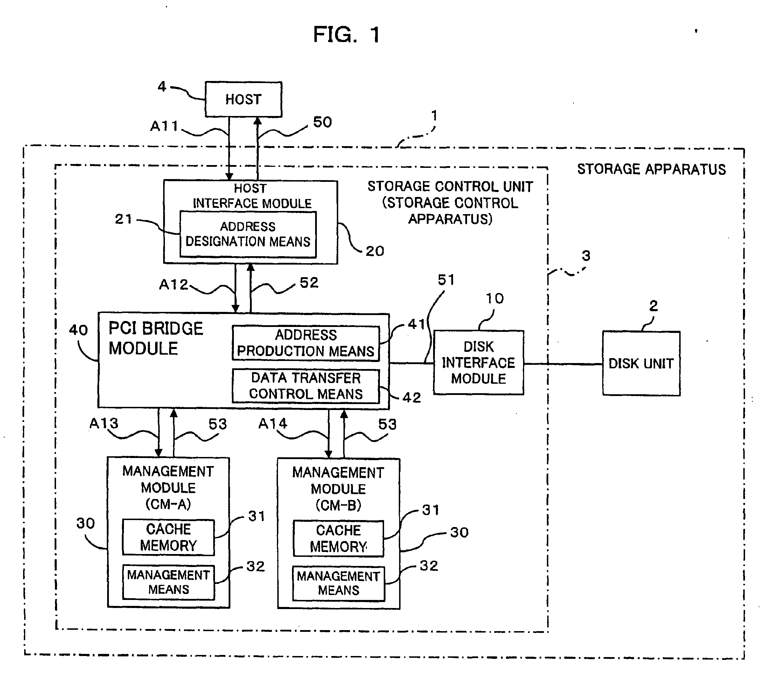

FIG. 1 is a block diagram showing a minimum basic configuration of a storage apparatus (storage control unit) according to an embodiment of the present invention. In FIG. 1, the storage apparatus, generally denoted at reference numeral 1, is designed to, in accordance with the access (input/output request, I/O request) from a host 4, write data from the host 4 or read out data requested by the host 4 for transferring it to the host 4. This storage apparatus 1 is made up of a disk unit (physical device) 2 and a storage control unit (storage control apparatus) 3 provided between the disk unit 2 and the host 4 for controlling the access to the disk unit 2 by the host 4.

The storage control unit 3 is composed of a disk interface module 10, a host interface module 20, management modules 30 and a PCI bridge module 40. In the storage control unit 3 having a minimum basic configuration shown in FIG. 1, each of the disk interface module 10, the host interface module 20 and the PCI bridge module 40 is one in number, while the management modules 30 are two in number.

The disk interface module 10 is for controlling the interface (data transfer) through a disk interface bus 54 to the disk unit 2.

The host interface module (first module) 20 is for controlling the interface (data transfer) through a fiber channel interface bus 50 to the host (external apparatus) 4. This host interface module 20 has a function as an address designation means 21 which will be described later.

Each of the management modules (second modules) 30 is for generally controlling the entire storage control unit 3, and it is equipped with a cache memory 31 for temporarily storing data from the host 4 to be written in the disk unit 2 or data to be read out from the disk unit 2 into the host 4, and the management module 30 also manages this cache memory 31. The management module 30 has a function as a management means 32 which will be mentioned later.

The PCI bridge module (bridge module) 40 is connected through PCI buses (interface buses) 51, 52 and 53 serving as standardized buses to the disk interface module 10, the host interface module 20 and the management modules 30 for achieving the data transfer among these disk interface module 10, the host interface module 20 and management modules 30. This PCI bridge module 40 has functions as an address production means 41 and a data transfer control means 42, which will be described later. Incidentally, although a general PCI-PCI bridge is designed to make the one-to-one connection, the PCI bridge module 40 to be used in this configuration is designed to make n-to-n (plurality: plurality) connections.

The duplication of written data is accomplished by two management modules 30 which are in mirror relation to each other. In the storage control unit 1 with a minimum basic configuration shown in FIG. 1, the management modules 30 are two in number, and these two management modules 30 are set in mirror relation to each other, and one management module 30 is handled as a master CM while the other management module 30 is handled as a mirror CM (pair CM).

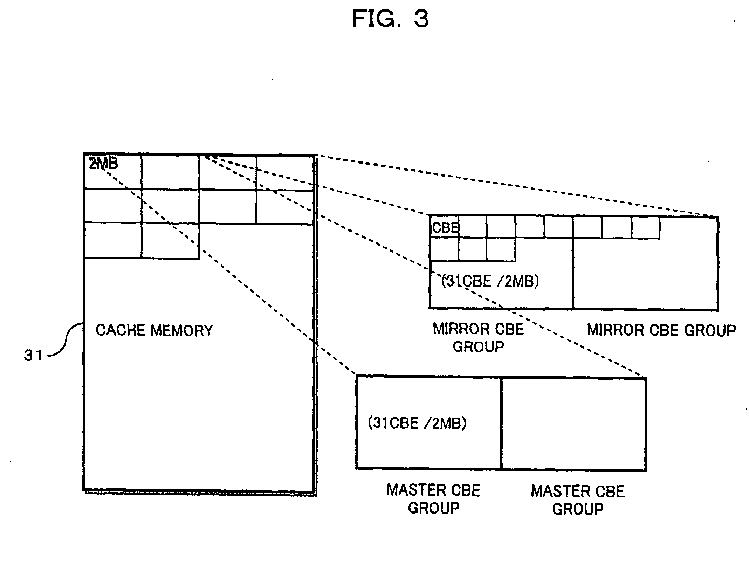

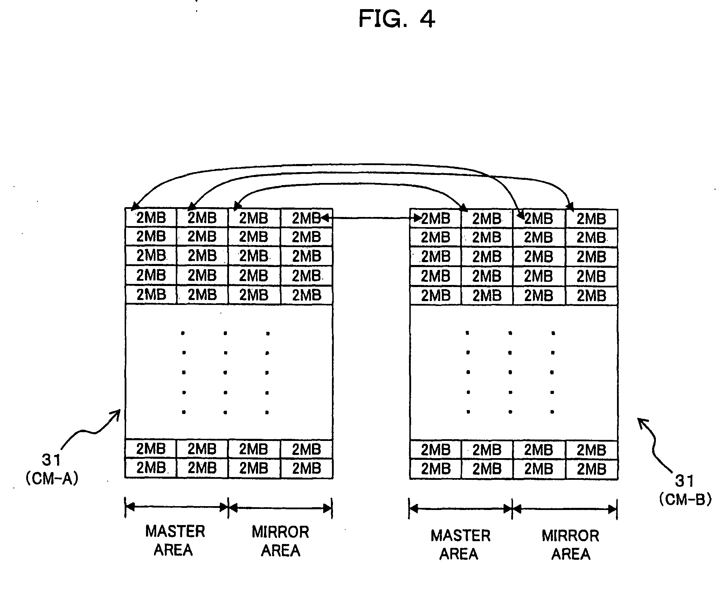

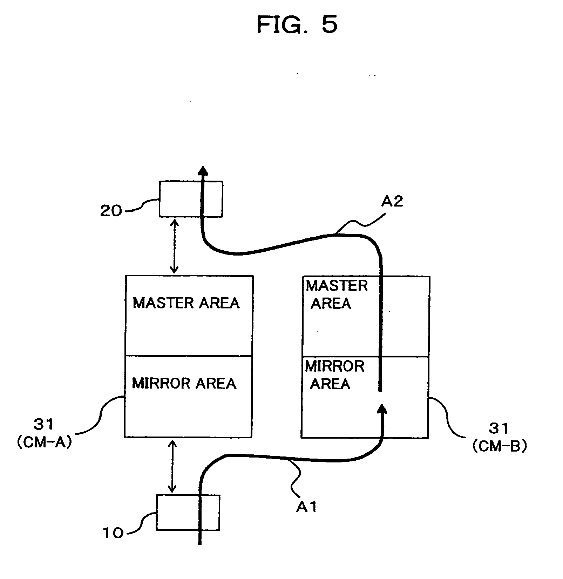

Referring to FIGs . 3 to 5, a description will be given hereinbelow of the cache memory 31 in each of the management modules 30. FIG. 3 is an illustration of an arrangement of the cache memory 31 according to this embodiment, FIG. 4 is an illustration of the association of a master area (local area) and a mirror area in the cache memory 31 according to this embodiment, and FIG. 5 is an illustration useful for explaining one example of a management operation of the cache memory 31 according to this embodiment.

As FIG. 3 shows, an area (cache area) in the cache memory 31 is partitioned into cache pages each having a predetermined size (for example, 2 MB (Mega Byte)), with an area (corresponding to two pages) corresponding to 4 MB being managed as one unit. Moreover, for the arrangement/management of each page, 31 CBEs (Cache Bundle control Element) each having 520 bytes x 128 blocks = 66560 bytes are allocated thereto. The management of each cache page is made by connecting a non-used CBE to a free link group. The CBE in use is managed by connecting it to an LRU (LeastRecentlyUsed) link and a hash entry. However, the CBEs in the mirror area are not connected to a free link.

In addition, as shown in FIGs. 3 and 4, in the cache area, the master areas (master CBE group) and the mirror areas (mirror CBE group) are alternately disposed in units of 4 MB to perform the management as a two-division memory format. In FIG. 4, the association between the master areas (local areas) and the mirror areas in the cache memories 31 of the two management modules 30 (CM-A and CM-B) which are in mirror relation to each other is indicated by arrows.

Still additionally, in this embodiment, the master area (local area) in the cache memory 31 of each of the management modules 30 is used to transfer and keep its own data for I/O requests accepted by the management module 30, and the mirror area in the cache memory 31 of each of the management modules 30 is basically used to transfer and keep duplicated data for the other management module 30. Yet additionally, in this embodiment, the mirror area in the cache memory 31 of each of the management modules 30 is also used to transfer readout data for I/O requests accepted by the other management module 30 as mentioned later with reference to FIG. 5. That is, in this embodiment, the mirror area of the cache memory 31 of each of the management modules 30 is managed by the other management module 30 which is positioned backwardly, and this management module 30 cannot use it directly. For example, the master area of CM-A is used as temporal storage to read or write data for I/O requests accepted by CM-A, and the mirror area of CM-A is used as temporal storage to write duplicated data for write requests accepted by CM-B and to read data for read requests accepted by CM-B. The all of mirror area of CM-A is managed by CM-B.

In this connection, in the master area/mirror area in each cache memory 31, the aforesaid readout data transfer memory area is established and, hence, a minimum capacity to be used as only that memory area is set in advance. This minimum capacity is defined/set as a "Read cache capacity" of a tuning parameter. For example, the default value of this minimum capacity is 64 MB, and if it is set at 64 MB, a readout data transfer memory area of approximately 1000 pages (exactly, 992 pages) is securable in the form of CBEs .

The master area and the mirror area in each of the cache memories 31 are restricted by the physical partitioning. This physical restriction enables the mirror cache (the mirror area of the mirror CM side cache memory 31) to be managed by the master CM side management means 32 (which will be mentioned later). At this time, the boundary between the master area and the mirror area on the physical arrangement is set in consideration of the cache page of the hardware. This allows the implementation of the dual-writing (forking write) according to the present invention. In the forking write according to this embodiment, as will be mentioned later, although the cache page address and the offset value (offset address) at that address are designated by the address designation means 21 of the host interface module 20, the offset values in the master area and the mirror area are required to be set at the same value due to the aforesaid hardware physical restriction.

In the storage control unit 3 according to this embodiment, for managing the above-mentioned cache memories 31, each of the management modules 30 has a function as a management means (cache management firmware) 32.

This management means 32 manages the information (number specifying a PCI bus of the mirror CM, or the like) on the management module (mirror CM) which is in mirror relation to the management module 30 (master CM) including this management means 32, and manages the association (this association is determined in advance) between the master area address in the master CM side cache memory 31 and the mirror area address in the mirror CM side cache memory 31 so that the mirror cache (the mirror area of the mirror CM side cache memory 31) is manageable from the master CM side. That is, the use/non-use of the CBEs in the mirror cache is manageable by the master CM side management means 32.

Furthermore, in this embodiment, since each of the management modules 30 is made such that the mirror cache is manageable from the master CM side through the use of the aforesaid management means 32, as shown in FIG. 5, in a case in which one management module 30 (CM-A) temporarily preserves, in the cache memory 31, the data read out from the disk unit 2 through the disk interface module 10 and the PCI bridge module 40 (omitted in FIG. 5) in accordance with a readout request (I/O request) by the host 4, even if the capacity of the master area of this cache memory 31 runs short, as indicated by an arrow A1 (staging processing) in FIG. 5, on the basis of the management situation in the management means 32, the management module 30 (CM-A) can preserve the aforesaid readout data in the mirror area (the aforesaid readout data transfer memory area secured in advance) in the cache memory 31 of the management module 30 (CM-B) which is in mirror relation to the management module 30 (CM-A) . As indicated by an arrow A2 (host readout processing) in FIG. 5, the readout data preserved in the mirror cache in this way is transferred from the mirror area of the CM-B through the PCI bridge module 40 and the host interface module 20 to the host 4.

The CBE (the corresponding CBE in the mirror area of the management module 30 being in mirror relation to that management module 30) paired with the CBE in use for the readout data in the master area of the cache memory 31 of the management module 30 is not used for the duplication of the written data, and it is left as a free area. If such an area is put in practical use, also for the I/O processing on a readout request, the cache memory 31 becomes usable with a using efficiency of approximately 100%. In this embodiment, the aforesaid free area in the mirror area of the mirror CM can be used as a readout data transfer memory area through the use of the function of the management means 32 in each of the management modules 30.

However, for realizing this function, between the management modules 30 and the disk interface module 10 or the host interface module 20, there is provided an interface accessible not only to the cache memory of an in-charge management module 30 (CM-A in the example shown in FIG. 5) set in advance for these interface modules 10 and 20 but also to the cache memory 31 of the management module 30 (CM-B in the example shown in FIG. 5) different from this in-charge management module 30. Through this interface, an I/O request cache address and a PCI number to a designated address of the management module 30 are designated from the management module 30 side. Moreover, when the interface modules 10 and 20 see the cache memory 31, the PCI number is additionally set up.

The storage control unit 3 according to this embodiment is equipped with the aforesaid management modules 30 (cache memory 31 and management means 32) to carry out the written data dual-writing (duplication) referred to as forking writing. Secondly, a description will be given hereinbelow of a function (function of the address designation means 21 of the host interface module 20, functions of the address production means 41 and data transfer control means 42 of the PCI bridge module 40) for carrying out the forking writing operation.

The address designation means 21 of the host interface module 20 produces, on the basis of information acquired from the management means 32 in one (in this case, CM-A) of the two management modules 30, addressing information for designating two written-in destinations in which the data to be written from the host 4 is dual-written in the cache memories 32 of the two management modules 30 through the PCI bridge module 40.

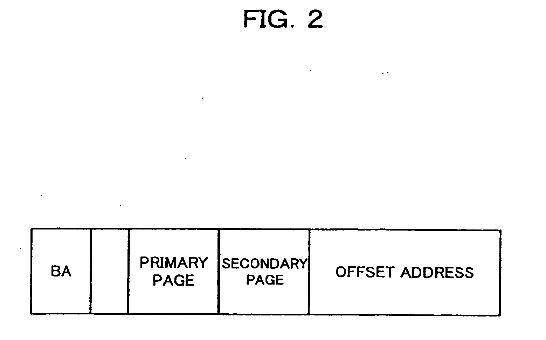

FIG. 2 is an illustration of a format for the addressing information to be produced by the address designation means 21. As shown in FIG. 2, in the aforesaid addressing information, the following (1) to (4) are designated as addresses (PCI addresses) to be instructed to the PCI bus 52. That is,

(1) Base Address (BA in FIG. 2);
(2) written-in page address (PA-A; primary page in FIG. 2) in the cache memory 31 of CM-A;
(3) written-in page address (PA-B; secondary page in FIG. 2) in the cache memory 31 of CM-B; and
(4) offset address (offset value; offset address in FIG. 2) indicative of a written head position in each cache page designated by the written-in page address of the aforesaid (2) and (3).

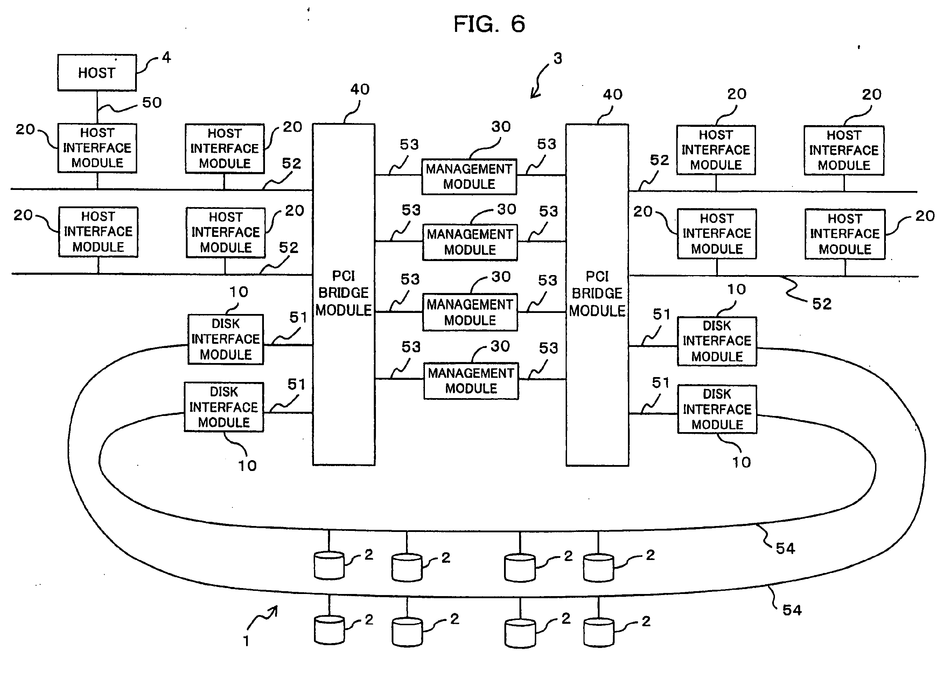

Incidentally, in the storage control unit 3 with a minimum basic configuration shown in FIG. 1, since the management modules 30 provided are only two in number and these two management modules 30 are always in the mirror relation to each other, unlike an example described later with reference to FIGs. 6 to 8, it is not necessary that the information (two transferred-to addresses) for specifying the two transferred-to management modules 30 to which the data to be written is transferred be designated in the aforesaid addressing information, and it may be fixedly retained in the interior of the PCI bridge module 40.

Moreover, the base address (BA) of the aforesaid (1) is information for making an instruction to the PCI bridge module 40 for, in the present I/O request (writing request) , the data to be written being transferred from the host interface module 20 through the PCI bridge module 40 to the management module 30. In more concretely, for example, an instruction to the PCI bridge module 40 is made such that, when the base address is "01", the data to be written is transferred to only the CM-A to be written therein, and when the base address is "10", the data to be written is transferred to only the CM-B to be written therein, and when the base address is "11", the data to be written is transferred to both the CM-A and CM-B to be written therein. Accordingly, in a case in which "11" is designated as the base address, the forking writing (dual-writing) according to this embodiment is implemented through the use of the functions of the address production means 41 and the data transfer control means 42 in the PCI bridge module 40.

The address productionmeans 41 of the PCI bridge module 40 analyzes the addressing information received together with the data to be written from the host interface module 20, and produces two transferred-to addresses for designating the two management modules (CM-A, CM-B) having the cache memories 31 in which the written data is actually written and written-in addresses in the respective cache memories 31.

As mentioned above, in the storage control unit 3 with a minimum basic configuration shown in FIG. 1, since the aforesaid two transferred-to addresses are not designated in the aforesaid addressing information but being fixedly retained in the interior of the PCI bridge module 40, it is produced by reading out the information retained therein. Moreover, the following addresses (a1) and (a2) are produced as the written-in address on the cache memory of the CM-A and the written-in address on the cache memory 31 of the CM-B, respectively.

$$(a1) \quad (PA-A \text{ of } CM-A) + (\text{offset value})$$

$$(a2) \quad (PA-B \text{ of } CM-B) + (\text{offset value})$$

Thus, the data to be written is stored at different addresses in the cache memories 31 of the master CM and the mirror CM, and the offsets (written positions) in the cache pages are managed tobe equal to each other irrespective of the difference in page address.

The data transfer control means 42 is for controlling the data transfer from the PCI bridge module 40 to the management modules 30 to transfer the same data to be written to the two management modules (CM-A, CM-B) corresponding to the two transferred-to addresses so that it is written at the aforesaid written-in addresses (a1) and (a2), produced by the address production means 41, in the cache memories 31 of the management modules 30.

With the above-mentioned arrangement, in the storage control unit 3 with the minimum basic configuration shown in FIG. 1, when the host interface module 20 receives a data writing request as the I/O request from the host 4 through fiber channel interface bus 50 (see an arrow A11 in FIG. 1), the address designation means 21 produces the addressing information (see FIG. 2) for designating two written-in destinations. This addressing information, together with the data to be written, is transferred from the host interface module 20 through the PCI bus 52 to the PCI bridge module 40 (see an arrow A12 in FIG. 1).

In the PCI bridge module 40, when recognizing a written-in command with the addressing information, the address production means 41 produces, on the basis of the addressing information from the host interface module 20, two transferred-to addresses (addresses designating CM-A and CM-B) and written-in addresses (a1) and (a2) in the cache memories 31. Moreover, the data transfer control means 42 transfers the same data to be written to the two management modules 30 corresponding to the aforesaid two transferred-to addresses, with it being written at the written-in addresses (a1) and (a2) in the cache memories 31 of the management modules 30 (see arrows A13 and A14 in FIG. 1).

In this way, the forking writing (dual-writing of the data to be written) is implemented as indicated by the arrows A11 to A14 in FIG. 1, and the same written data is written in a CBE of a cache page of the master area of the cache memory 31 of the CM-A and in a CBE (paired CBE) of a cache page of the mirror area of the cache memory 31 of the CM-B which is associated with the aforesaid master area cache page CBE in advance.

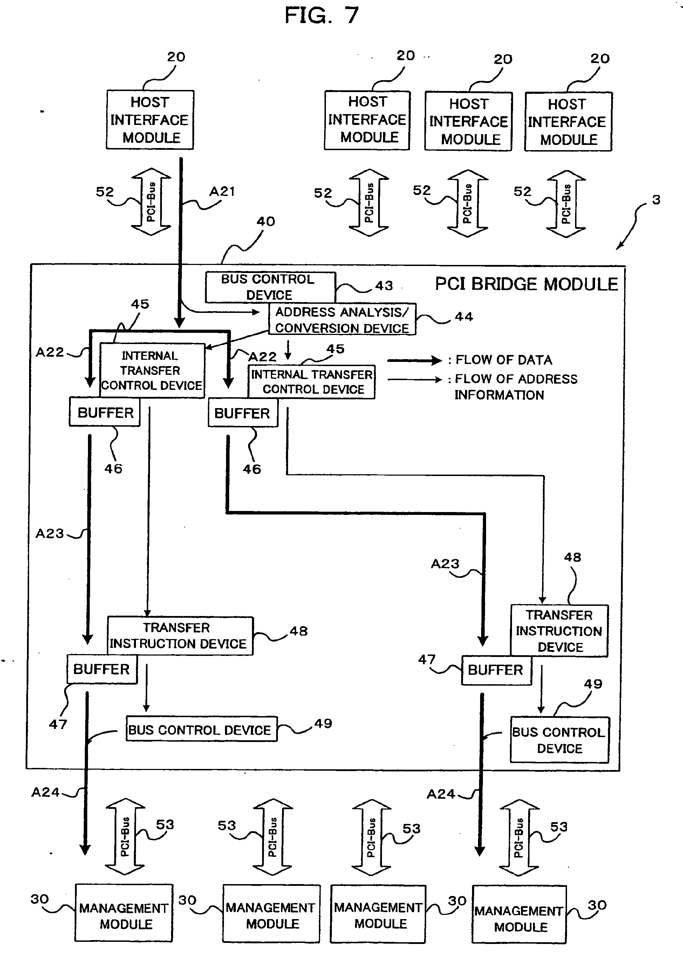

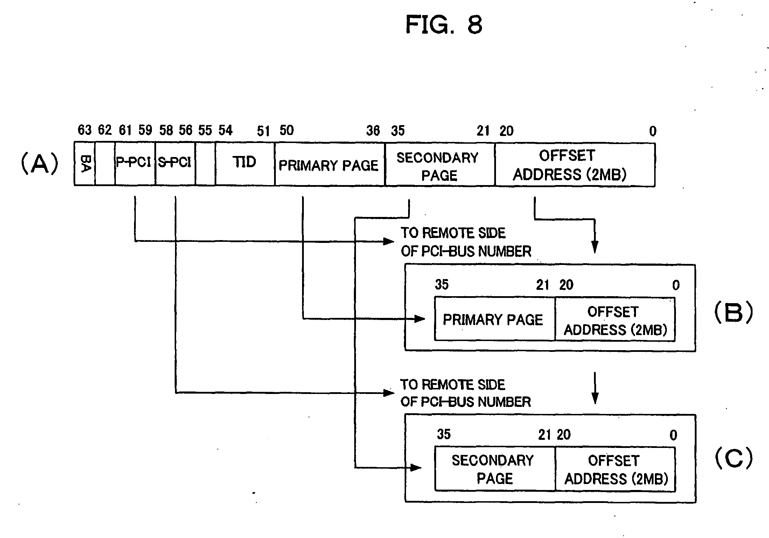

Furthermore, referring to FIGs . 6 to 8, a description will be given hereinbelow of a concrete example of a configuration of the storage apparatus (storage control unit) according to an embodiment of the present invention. FIG. 6 is a block diagram showing a concrete example of a configuration of the storage apparatus 1 (storage control unit 3), FIG. 7 is a block diagram showing a concrete example of an essential part of the PCI bridge module 40 in the storage control unit 3 shown in FIG. 6, and FIG. 8 is an illustration of a format for addressing information to be produced by the host interface module 20 (address designation means 21) in the storage control unit 3 shown in FIG. 7 and a format for address information to be produced from this addressing information by the PCI bridge module 40 (address production means 41). In FIGs. 6 and 7, the same reference numerals as those used above represent the same or approximately same parts, and the description thereof will be omitted for brevity.

As FIG. 6 shows, the storage control unit 3 of the storage apparatus 1 is made up of eight host interface modules 20, four management modules 30, four disk interface modules 10 and two PCI bridge modules 40 and, for example, eight disk units 2 are connected through disk interface buses 54 to the four disk interface modules 10.

In the storage control unit 3 shown in FIG. 6, each of the host interface modules 20 also has a function as the aforesaid address designation means 21 (omitted in FIG. 6 ) . This address designationmeans 21 produces, on the basis of the information acquired from the management means 32 of one (CM-A, master CM) of the two management modules 30, the addressing information to designate two written-in destinations so that the data to be written the host interface module 20 receives from the host 4 is doubly written through the PCI bridge module 40 in the cache memories 31 of the two management modules 30. However, in the host interface module 20 (address designation means 21) shown in FIG. 6, as indicated by (A) in FIG. 8, in the aforesaid addressing information, the following addresses (1) to (7) are designated as the addresses (PCI addresses) to be instructed to the PCI buses 52. That is,

(1) base address (BA in FIG. 8);
(2) written-in page address (PA-A; primary page in FIG. 8) in the cache memory 31 of CM-A;
(3) written-in page address (PA-B; secondary page in FIG. 8) in the cache memory 31 of CM-B;
(4) offset address indicative of a written head position in each cache page designated by the aforesaid written-in page addresses of (2) and (3);
(5) number for specifying a PCI bus of CM-A (specific information for specifying the master CM having the cache memory 31 in which data is to be actually written; P-PCI in FIG. 8);
(6) number for specifying a PCI bus of CM-B (specific information for specifying the mirror CM having the cache memory 31 in which data is to be actually written; S-PCI in FIG. 8); and
(7) arbitrary number given for specifying an operation (TID (Transaction ID)).

Since the storage control unit 3 shown in FIG. 6 uses four management modules 30, there is a need to designate, of these four management modules 30, two management modules 30 which is in mirror relation to each other. Therefore, the address designation means 21 is made to designate the aforesaid information of (5) and (6).

Moreover, the aforesaid base address (BA) of (1) fulfills a function similar to that shown in FIG. 2, and this BA is used for an instruction to the PCI bridge module 40. For example, when the base address is "10", the data to be written is transferred to only the management module 30 designated in the CM-A field (the aforesaid (5)) to be written in only the CM-A with no regard to the designation value in the CM-B field (the aforesaid (6)), and when the base address is "11", the data to be written is transferred to both the CM-A and CM-B to be written therein. Therefore, in this transfer instruction (dual-writing instruction) method, when "11" is designated as the base address, the forking writing (dual-writing) is implemented through the use of the functions of the address production means 41 and the data transfer control means 42 in the PCI bridge module 40.

In addition to the transfer instruction (dual-writing instruction) method using BA mentioned above, it is also possible to employ a method in which, without using BA, the transfer and writing are basically always made with respect to two management modules 30 (CM-A and CM-B) designated in the aforesaid fields of (5) and (6) and, only when the CM-A designation value and the CM-B designation value are equal to each other, the transfer and writing is made with respect to one management module 30.

In the storage control unit 3 shown in FIG. 6, as shown in FIG. 7, the PCI bridge module 40 is equipped with a bus control device 43, an address analysis/conversion device 44, internal transfer control devices 45, buffers 46 and 47, transfer instruction devices 48 and bus control devices 49.

The bus control devices 43 and 49 are for controlling the PCI buses 52 and 53 (interface control).

The address analysis/conversion device 44 fulfills a function similar to that of the aforesaid address production means 41, and analyzes the addressing information, shown in (A) of FIG. 8, received together with the data to be written from the host interface module 20 to produce two transferred-to addresses for designating two management modules 30 (CM-A and CM-B) having the cache memories 31 in which the data is actually written and written-in addresses in the respective cache memories 31.

The two transferred-to addresses are produced by reading out two PCI bus numbers (P-PCI and S-PCI) in the aforesaid (5) and (6) fields from the addressinginformation shown in (A) of FIG. 8. Moreover, as in the case of the storage control unit 3 shown in FIG. 1, as indicated by (B) and (C) in FIG. 8, as the written-in address on the CM-A cache memory 31 and the written-in address on the CM-B cache memory 31, the following addresses (a1) and (a2) are respectively produced from the addressing information indicated by (A) in FIG. 8. That is,

```
(a1) (PA-A of CM-A) + (offset value);
```

and

## (a2) (PA-B of CM-B) + (offset value).

Thus, also in the storage apparatus 1 shown in FIG. 6, the data to be written is stored at different addresses in the master CM and mirror CM cache memories 31 and, in this case, the offsets (writing positions) are managed to be equal to each other in the respective cache pages regardless of the difference in page address.

The buffer 46 is located on the host interface module 20 side of the PCI bridge module 40, and temporarily retains the data to be written received from the host interface module 20. The buffer 47 is provided in corresponding relation to each of the management modules 30, and receives the written data, to be transferred to the management module 30, from the target write buffer 46 to retain it temporarily.

The internal transfer control devices 45 and the transfer instruction devices 48 fulfill a function similar to that of the aforesaid data transfer control means 42, and in fact, these devices 45 and 48 are arranged in a state integrated with each other. Each of the internal transfer control devices 45 transfers, on the basis of an output (two bus numbers in the aforesaid (5) and (6) fields) of the address analysis/conversion device 44, the data to be written from the host interface module side buffer 46 to the management module side buffer 47, and the transfer instruction device 48 makes an instruction, on the basis of an output (the aforesaid addresses (a1), (a2)) of the address analysis/conversion device 44, to the management module side bus control device 49 for transmitting the written data of the management module side buffer 47 to the designated address.

With the above-described arrangement, in the storage control unit 3 shown in FIGs . 6 and 7, when the host interface module 20 receives a data writing request as the I/O request from the host 4 through the fiber channel interface bus 50, the address designation means 21 produces addressing information (see (A) in FIG. 8) for designating two written-in destinations. This addressing information, together with the data to be written, is transferred from the host interface module 20 through the PCI bus 52 to the PCI bridge module 40 (see an arrow A21 in FIG. 7) . At this time, the data to be written is transferred from the host interface module 20 in a dual write PCI address format.

In the PCI bridge module 40, when receiving the dual write, the same data to be written is simultaneously written through the buffer control device 43 in the two buffers 46 with respect to one PCI writing (see arrows A22 in FIG. 7) . Moreover, in the PCI bridge module 40, when recognizing a writing command including the addressing information, the address analysis/conversion device 44 extracts/produces two transferred-to addresses (PCI bus numbers for specifying the PCI buses of CM-A and CM-B) from the addressing information coming from the host interface module 20, and further produces written-in addresses (a1) and (a2) in each of the cache memories 31.

In addition, the internal transfer control devices 45 transfer the written data retained in the two buffers 46 to the two buffers 47 respectively corresponding to the CM-A and CM-B PCI bus numbers (see arrows A23 in FIG. 7), and the transfer instruction devices 48 and the bus control devices 49 transfer the written data, transferred to the two buffers 47, to the CM-A and CM-B so that it is simultaneously written at the designated addresses (a1) and (a2) in the cache memories 31 (see arrows A24 in FIG. 7).

Thus, also in the storage control unit 3 shown in FIGs . 6 and 7, the forking writing (dual-writing of the data to be written) is carried out as indicated by the arrows A21 to A24 in FIG.7, and the same written data is written in a CBE of a cache page in the master area of the CM-A cache memory 31 and in a CBE (paired CBE) of a cache page in the mirror area of the CM-B cache memory 31 which is associated with the aforesaid master area cache page CBE in advance.

As described above, with the storage control unit 3 (storage apparatus 1) according to the embodiment of the present invention, when the host interface module 20 carries out the address designation once (single address designation) to perform once the data transfer (single data transfer) from the host interface module 20 to the PCI bridge module 40, the data to be written is transferred to the cache memories 31 of the two management modules 30 through the PCI bridge module 40, which enables a higher transfer rate than a standardized bus (PCI bus) , to be doubly written therein. Therefore, the dual writing (forking writing) into the cache memories 31 can be made at a high rate, which achieves considerable improvement of the processing performance.

In addition, since the address designation means 21 of the host interface module 20 designates, as the written-in addresses for written data in the cache memories 31, a page address in the cache memory of each of the management modules 30 and an offset address in each page, the data to be written can be transferred to different addresses on the cache memories of the two management modules 30 to be written therein, which increases the degree of freedom of the cache management and achieves the efficient use of the cache memories 31.

Still additionally, since the management of the mirror cache can be made from the master CM side through the use of the management means (cache management firmware) 32 of each of the management modules 30, the address designation means 21 of the host interface module 20 can produce the addressing information on the basis of the information acquired from the management means 32 in one of the two management modules 30 without making communications between the two management modules 30 which are in mirror relation to each other.

Yet additionally, since the mirror cache can be managed from the master CM side through the use of the management means (cache management firmware) 32 of each of the management modules 30, one management module 30 (CM-A) can use the mirror area of the other management module 30 (CM-B) efficiently without making communications between the two management modules 30 which are in mirror relation to each other. For example, in a case in which the capacity of the master area of the cache memory 31 in one management module 30 (CM-A) runs short, a free area of the mirror area in the cache memory 31 of the other management module 30 (CM-B) can be utilized on the basis of a management situation by the management means 32, which enables the efficient (approximately 100%) use of both the master area and the mirror area in the cache memory 31.

Moreover, since standardized buses (PCI buses 51 to 53) are used as the interfaces outside the PCI bridge module 40, the existing hardware can directly be used as the host interface module 20 and the management modules 30, and the forking writing (data dual writing) according to the present invention is realizable only by altering the address designation method (the function of the address designation means 21).

It should be understood that the present invention is not limited to the above-described embodiments, and that changes and variations are possible within the scope of the claims.

For example, although in the above-described embodiment the present invention is applied to a storage control unit, the present invention is not limited to this but, as in the case of the above-described embodiment, it is also applicable to an apparatus having a dual-writing function (multi-writing function) whereby data fed from an external apparatus such as a host is written two or more cache memories, and this can provide the effects similar to those of the above-described embodiment.

Moreover, although in the above-described embodiment the interface provided between the host 4 and the storage control unit 3 is a fiber channel interface, the present invention is not limited to this.

Still moreover, the functions of the above-mentioned address designation means 21, management means 32, address production means 41, data transfer control means 42, bus control device 43, address analysis/conversion device 44, internal transfer control device 45, transfer instruction device 48 and bus control device 49 can be realized in a manner such that a CPU (Central Processing Unit) which acts as the host interface module 20, the management modules 30 and PCI bridge module 40 executes a predetermined program. For example, this program can be offered in a state recorded in a computer-readable recording medium such as flexible disk, CD-ROM, CD-R, CD-RW or DVD.

As described above, according to the present invention, when the data transfer from the host interface module to the bridge module is made only once, the data to be written is transferred through the bridge module, which provides a higher transfer rate than a standardized bus, to two cache memories to be doubly written therein. Therefore, the dual-writing in the cache memories can be performed at a higher speed, thereby enhancing the processing performance considerably.

Accordingly, the present invention is suitable for use in an apparatus having a data dual-writing function, such as a storage control unit made to control the access to a physical device (magnetic disk unit or the like) of a host, and the usability thereof is extremely high.

**Claims**

1.  A storage control apparatus adapted to be placed between a disk unit (2) and a host (4) for controlling access to said disk unit (2) by said host (4), said storage control apparatus comprising:

    a plurality of management modules (30), each including a cache memory (31), for generally controlling the entire apparatus;
    **characterised by**:

    a disk interface module (10) for controlling an interface to said disk unit (2);
    a host interface module (20) for controlling an interface to said host (4); and
    a bridge module (40) connected through respective interface busses (51,52,53) to said disk interface module (10), said host interface module (20) and said management modules (30) for making connections among said disk interface module (10), said host interface module (20) and said management modules (30) for data transfer among said modules (10, 20, 30) ,

    and further **characterised in that**:

    said host interface module (20) includes:

    address designation means (21) for producing addressing information to designate two written-in destinations, being destinations at which data received from said host (4) is to be written through said bridge module (40) into the respective cache memories (31) of two of said plurality of management modules (30); and

said bridge module (40) includes:

address production means (41) for analyzing said addressing information, which is received from said host interface module (20) together with said data to be written, to produce two transferred-to addresses, being addresses designating the two management modules (30) that include the cache memories (31) in which said data is to be actually written, and also to produce written-in addresses, being addresses in those cache memories (31); and

data transfer control means (42) for controlling data transfer from said bridge module (40) to said management modules (30) so that said data is transferred simultaneously via different respective said interface buses to the two management modules (30) designated by said two transferred-to addresses, whereafter the transferred data is written at said written-in address in said cache memory (31) of each of the two management modules (30).

2. The storage control apparatus according to claim 1, wherein said address designation means (21) is operable to designate, in said addressing information, a page address in said cache memory (31) of each of said management modules (30) and an offset address in a page designated by said page address, as said written-in address for said data in said cache memory (31).

3. The storage control apparatus according to claim 2, wherein said address designation means (21) is operable to designate, in said addressing information, specific information for specifying said two management modules (30) that include said cache memories (31) in which said data is to be actually written, as said two transferred-to addresses for said data.

4. The storage control apparatus according to claim 3, wherein each said interface bus (51,52,53) is a PCI (Peripheral Component Interconnect) bus, and numbers for specifying said PCI buses for said two management modules 30 are designated as said specific information.

5. The storage control apparatus according to any one of claims 1 to 4, wherein each of said management modules (30) includes management means (32) for managing information on another one of the management module (30) which is in mirror relation to the management module (30) concerned and for managing the association between a master area address in said cache memory (31) in the management module (30) concerned and a mirror area address in said cache memory (31) of said other management module (30) in said mirror relation to the management module (30) concerned, and said address designation means of said host interface module (20) is operable to produce said addressing information on the basis of information acquired from said management means (32) of one of the two management modules (30).

6. The storage control apparatus according to claim 5, wherein, in a case in which a capacity of a master area of said cache memory (31) runs short when data read out from said disk unit (2) through said disk interface module (10) and said bridge module (40) is temporarily preserved in the cache memory (31), each of said management modules (30) preserves the readout data in a mirror area of said cache memory (31) of another one of the management modules (30), which is in the mirror relation to the management module (30) concerned, on the basis of a situation of management by said management means (32).

**Patentansprüche**

1. Speichersteuervorrichtung, die dafür ausgelegt ist, um zwischen einer Platteneinheit (2) und einem Host (4) platziert zu sein, zum Steuern des Zugriffs auf die Platteneinheit (2) durch den Host (4), welche Speichersteuervorrichtung umfasst:

eine Vielzahl von Verwaltungsmodulen (30), die jeweils einen Cache-Speicher (31) enthalten, zum allgemeinen Steuern der gesamten Vorrichtung;
**gekennzeichnet durch**:

ein Plattenschnittstellenmodul (10) zum Steuern einer Schnittstelle zu der Platteneinheit (2);

ein Hostschnittstellenmodul (20) zum Steuern einer Schnittstelle zu dem Host (4) ; und
ein Brückenmodul (40), das **durch** jeweilige Schnittstellenbusse (51, 52, 53) mit dem Plattenschnittstellenmodul (10), dem Hostschnittstellenmodul (20) und den Verwaltungsmodulen (30) zum Herstellen von Verbindungen zwischen dem Plattenschnittstellenmodul (10), dem Hostschnittstellenmodul (20) und den Verwaltungsmodulen (30) für den Datentransfer zwischen den genannten Modulen (10, 20, 30) verbunden ist,

und ferner **dadurch gekennzeichnet, dass**:

das Hostschnittstellenmodul (20) enthält:

ein Adressenbezeichnungsmittel (21) zum Erzeugen von Adressierinformationen, um zwei Schreibziele zu bezeichnen, die Ziele sind, an denen Daten, die von dem Host (4) empfangen werden, **durch** das Brückenmodul (40) in die jeweiligen Cache-Speicher (31) von zweien von der Vielzahl von Verwaltungsmodulen (30) zu schreiben sind; und

das Drückenmodul (40) enthält:

ein Adressenerzeugungsmittel (41) zum Analysieren der Adressierinformationen, die von dem Hostschnittstellenmodul (20) zusammen mit den zu schreibenden Daten empfangen werden, um zwei Transferadressen zu erzeugen, die Adressen sind, welche die zwei Verwaltungsmodule (30) bezeichnen, die die Cache-Speicher (31) enthalten, in die die Daten tatsächlich zu schreiben sind, und auch Schreibadressen zu erzeugen, die Adressen in jenen Cache-Speichern (31) sind; und
ein Datentransfersteuermittel (42) zum Steuern des Datentransfers von dem Brückenmodul (40) zu den Verwaltungsmodulen (30), so dass die Daten gleichzeitig über die verschiedenen jeweiligen Schnittstellenbusse zu den zwei Verwaltungsmodulen (30) transferiert werden, die **durch** die zwei Transferadressen bezeichnet sind, wonach die transferierten Daten an der Schreibadresse in den Cache-Speicher (31) von jedem der zwei Verwaltungsmodule (30) geschrieben werden.

2. Speichersteuervorrichtung nach Anspruch 1, bei der das Adressenbezeichnungsmittel (21) betriebsfähig ist, um in den Adressierinformationen eine Seitenadresse in dem Cache-Speicher (31) von jedem der Verwaltungsmodule (30) und eine Versetzungsadresse in einer durch die Seitenadresse bezeichneten Seite als Schreibadresse für die Daten in dem Cache-Speicher (31) zu bezeichnen.

3. Speichersteuervorrichtung nach Anspruch 2, bei der das Adressenbezeichnungsmittel (21) betriebsfähig ist, um in den Adressierinformationen spezifische Informationen zum Spezifizieren der zwei Verwaltungsmodule (30), welche die Cache-Speicher (31) enthalten, in die die Daten tatsächlich zu schreiben sind, als die zwei Transferadressen für die Daten zu bezeichnen.

4. Speichersteuervorrichtung nach Anspruch 3, bei der jeder Schnittstellenbus (51, 52, 53) ein PCI-(Peripheral Component Interconnect)-Bus ist und Zahlen zum Spezifizieren der PCI-Busse für die zwei Verwaltungsmodule (30) als die spezifischen Informationen bezeichnet werden.

5. Speichersteuervorrichtung nach einem der Ansprüche 1 bis 4, bei der jeder der Verwaltungsmodule (30) ein Verwaltungsmittel (32) enthält, zum Verwalten von Informationen über ein anderes Verwaltungsmodul (30), das zu dem betreffenden Verwaltungsmodul (30) in einer Spiegelbeziehung steht, und zum Verwalten der Zuordnung zwischen einer Masterbereichsadresse in dem Cache-Speicher (31) in dem betreffenden Verwaltungsmodul (30) und einer Spiegelbereichsadresse in dem Cache-Speicher (31) des anderen Verwaltungsmoduls (30) in der Spiegelbeziehung zu dem betreffenden Verwaltungsmodul (30), und das Adressenbezeichnungsmittel des Hostschnittstellenmoduls (20) betriebsfähig ist, um die Adressierinformationen auf der Basis von Informationen zu erzeugen, die von dem Verwaltungsmittel (32) von einem der zwei Verwaltungsmodule (30) erfasst werden.

6. Speichersteuervorrichtung nach Anspruch 5, bei der in dem Fall, dass eine Kapazität eines Masterbereichs des Cache-Speichers (31) knapp wird, wenn Daten, die von der Platteneinheit (2) durch das Plattenschnittstellenmodul (10) und das Brückenmodul (40) ausgelesen werden, temporär in dem Cache-Speicher (31) gesichert werden, jedes der Verwaltungsmodule (30) die ausgelesenen Daten in einem Spiegelbereich des Cache-Speichers (31) eines anderen der Verwaltungsmodule (30), das zu dem betreffenden Verwaltungsmodul (30) in der Spiegelbeziehung steht, auf der Basis einer Situation der Verwaltung durch das Verwaltungsmittel (32) sichert.

**Revendications**

1. Dispositif de commande de mémorisation conçu pour se placer entre une unité de disque (2) et un hôte (4) pour commander l'accès à ladite unité de disque (2) par ledit hôte (4), ledit dispositif de commande de mémorisation comprenant :

   une pluralité de modules (30) de gestion, incluant chacun une antémémoire (31), pour commander globalement tout le dispositif ;
   **caractérisé :**

   **par** un module (10) d'interface de disque destiné à commander l'interface avec ladite unité de disque (2) ;
   par un module (20) d'interface d'hôte destiné à commander l'interface avec ledit hôte (4) ; et
   par un module (40) formant pont connecté au moyen de bus respectifs (51, 52, 53) d'interface audit module (10) d'interface de disque, audit module (20) d'interface d'hôte et auxdits modules (30) de gestion pour réaliser des connexions entre ledit module (10) d'interface de disque, ledit module (20) d'interface d'hôte et lesdits modules (30) de gestion pour transfert de données entre lesdits modules (10, 20, 30),

   et **caractérisé en outre :**

   **en ce que** ledit module (20) d'interface d'hôte inclut :

   un moyen (21) de désignation d'adresse destiné à produire une information d'adressage pour désigner deux destinations d'écriture, qui sont des destinations auxquelles des données reçues dudit hôte (4) sont à écrire par l'intermédiaire dudit module (40) formant pont dans les antémémoires (31) respectives de deux de ladite pluralité de modules (30) de gestion ; et

   **en ce que** ledit module (40) formant pont inclut :

   un moyen (41) de production d'adresse destiné à analyser ladite information d'adressage, qui est reçue dudit module (20) d'interface d'hôte conjointement avec lesdites données à écrire, pour produire deux adresses de destination de transfert, qui sont des adresses désignant les deux modules (30) de gestion qui incluent les antémémoires (31) dans lesquelles lesdites données sont à écrire réellement, et pour produire aussi des adresses de destination d'écriture, qui sont des adresses dans ces antémémoires (31) ; et
   un moyen (42) de commande de transfert destiné à commander le transfert de données dudit module (40) formant pont auxdits modules (30) de gestion de façon que lesdites données soient transférées en même temps via lesdits bus d'interface respectivement différents aux deux modules (30) de gestion désignés par lesdites deux adresses de destination de transfert, après quoi les données transférées sont écrites à ladite adresse de destination d'écriture dans ladite antémémoire (31) de chacun des deux modules (30) de gestion.

2. Dispositif de commande de mémorisation selon la revendication 1, dans lequel ledit moyen (21) de désignation d'adresse et utilisable pour désigner, dans ladite information d'adressage, en tant que ladite adresse de destination d'écriture pour lesdites données dans ladite antémémoire (31), une adresse de page de ladite antémémoire (31) de chacun desdits modules (30) de gestion, et une adresse relative dans une page désignée par ladite adresse de page.

3. Dispositif de commande de mémorisation selon la revendication 2, dans lequel ledit moyen (21) de désignation d'adresse est utilisable pour désigner, dans ladite information d'adressage, en tant que lesdites deux adresses de destination de transfert pour lesdites données, de l'information spécifique destinée à spécifier lesdits deux modules (30) de gestion qui incluent lesdites antémémoires (31) dans lesquelles lesdites données sont à écrire réellement.

4. Dispositif de commande de mémorisation selon la revendication 3, dans lequel chacun desdits bus (51, 52, 53) d'interface est un bus d'interconnexion de composants périphériques (PCI pour "Peripheral Component Interconnect"), et dans lequel des numéros destinés à spécifier lesdits bus de PCI pour lesdits deux modules (30) de gestion sont désignés en tant que ladite information spécifique.

5. Dispositif de commande de mémorisation selon l'une quelconque des revendications 1 à 4, dans lequel chacun desdits modules (30) de gestion inclut un moyen (32) de gestion destiné à gérer l'information sur un autre des modules (30) de gestion qui est dans une relation en miroir avec le module (30) de gestion concerné et à gérer l'association entre une adresse de zone maîtresse de ladite antémémoire (31) dudit module (30) de gestion concerné et une adresse de zone miroir de ladite antémémoire (31) dudit autre module (30) de gestion dans ladite relation en miroir avec le module (30) de gestion concerné, et dans lequel ledit moyen de désignation d'adresse dudit module (20) d'interface d'hôte est utilisable pour produire ladite information d'adressage sur la base de l'information acquise dudit moyen (32) de gestion de l'un des deux modules (30) de gestion.

6. Dispositif de commande de mémorisation selon la revendication 5, dans lequel, dans le cas où la capacité d'une zone maîtresse de ladite antémémoire (31) devient trop courte lorsque des données lues à partir de ladite unité de disque (2) par l'intermédiaire dudit module (10) d'interface de disque et dudit module (40) formant pont sont conservées temporairement dans l'antémémoire (31), chacun desdits modules (30) de gestion conserve les données lues dans une zone miroir de ladite antémémoire (31) d'un autre des modules (30) de gestion, qui est dans la relation en miroir avec le module (30) de gestion concerné, sur la base d'une situation de gestion par ledit moyen (32) de gestion.

**FIG. 1**

FIG. 2

| BA | | PRIMARY PAGE | SECONDARY PAGE | OFFSET ADDRESS |
|---|---|---|---|---|

# FIG. 3

2MB

CACHE MEMORY

31

CBE

(31CBE /2MB)

MIRROR CBE
GROUP

MIRROR CBE GROUP

(31CBE /2MB)

MASTER CBE
GROUP

MASTER CBE
GROUP

EP 1 662 400 B1

# FIG. 4

MASTER      MIRROR            MASTER      MIRROR

AREA          AREA               AREA          AREA

31
(CM-A)

31
(CM-B)

EP 1 662 400 B1

# FIG. 5

# FIG. 6

EP 1 662 400 B1

# FIG. 7

# FIG. 8

(A) | BA | P-PCI | S-PCI | TID | PRIMARY PAGE | SECONDARY PAGE | OFFSET ADDRESS (2MB)
bits: 63 62 61 59 58 56 55 54 51 50 36 35 21 20 0

TO REMOTE SIDE OF PCI-BUS NUMBER

(B) | PRIMARY PAGE | OFFSET ADDRESS (2MB)
bits: 35 21 20 0

TO REMOTE SIDE OF PCI-BUS NUMBER

(C) | SECONDARY PAGE | OFFSET ADDRESS (2MB)
bits: 35 21 20 0

EP 1 662 400 B1

**EP 1 662 400 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20030158999 A1
- US 5937174 A
- JP 7160432 A
- JP 5189314 A
- JP 7020994 A